# EUROPÄISCHE PATENTSCHRIFT

(11) **EP 1 288 843 B1**
(45) Veröffentlichungstag und Bekanntmachung des Hinweises auf die Patenterteilung: **26.09.2007**
(21) Anmeldenummer: 02016667.4
(22) Anmeldetag: 25.07.2002
(51) Int. Cl.: G06K 7/14, G06K 7/10

(54) **Verfahren zur Erkennung eines Codes**
Method for recognizing a code
Méthode de reconnaissance d'un code

(30) Priorität: 28.08.2001 DE 10141876
(43) Veröffentlichungstag der Anmeldung: 05.03.2003
(73) Patentinhaber: SICK AG, 79183 Waldkirch (DE)
(72) Erfinder: Reichenbach, Jürgen, 79312 Emmendingen (DE); Stortz, Christiane, 77746 Schutterwald (DE); Hafner, Carl Joseph, 79312 Emmendingen (DE); Hauser, Peter, 79108 Freiburg (DE)
(74) Vertreter: Manitz, Finsterwald & Partner GbR

(56) Entgegenhaltungen:
- EP-A- 0 569 962
- EP-A- 0 785 522
- US-A- 5 739 518
- US-B1- 6 244 764
- "FAST METHOD FOR PERFORMING CELLULAR LOGIC OPERATIONS ON BINARY IMAGES" IBM TECHNICAL DISCLOSURE BULLETIN, IBM CORP. NEW YORK, US, Bd. 37, Nr. 4A, 1. April 1994 (1994-04-01), Seiten 199-204, XP000446638 ISSN: 0018-8689
- BLOOMBERG D S ET AL: "BLUR HIT-MISS TRANSFORM AND ITS USE IN DOCUMENT IMAGE PATTERN DETECTION" DOCUMENT RECOGNITION 2. SAN JOSE, FEB. 6 - 7, 1995, BELLINGHAM, SPIE, US, Bd. CONF. 2, 6. Februar 1995 (1995-02-06), Seiten 278-292, XP000642555 ISBN: 0-8194-1769-6

## Beschreibung

Die Erfindung betrifft ein Verfahren zur Erkennung eines Codes, der innerhalb eines Bilddatensatzes verschlüsselt ist, welcher für mehrere Bildpunktelemente jeweils eine Information über einen Grauwert enthält.

Derartige Codes existieren als zweidimensionale Codes, beispielsweise von der Art Maxicode, Datamatrix, QR, PDF 417 oder MicroPDF 417. Bereits seit längerem sind eindimensionale Codes, insbesondere sogenannte Barcodes bekannt.

Diese Codes dienen beispielsweise als visuelle Informationsträger auf Gegenständen, die identifiziert oder voneinander unterschieden werden sollen. Ein solcher Code wird üblicherweise mittels eines optoelektronischen Sensors, beispielsweise eines CCD- oder CMOS-Empfängers, mit einer zeilen- oder matrixförmigen Anordnung von Bildpunktelementen erfaßt und in eine elektronische Bildinformation umgewandelt, die als Bilddatensatz vorliegt. In dem Bilddatensatz sind in einer tabellarischen Auflistung die Grauwertdaten aufgeführt, die für die einzelnen Bildpunktelemente des Sensors ermittelt wurden.

Der Bilddatensatz wird zunächst auf das Vorhandensein eines Referenzmusters untersucht, das die Anordnung des betreffenden Codes innerhalb der Bildinformation sowie die Art des Codes kennzeichnet. Auf Grundlage der Identifizierung dieses Referenzmusters werden die einzelnen Codeelemente, aus denen der Code zusammengesetzt ist, identifiziert. Danach erfolgt für diese Codeelemente anhand einer Schwellenwertbildung eine Binarisierung, d. h. der für ein Codeelement ermittelte Grauwert wird der Kategorie "weiß" oder der Kategorie "schwarz" zugeordnet. Im Anschluß an diese Schritte erfolgt die eigentliche Decodierung, und zwar anhand eines der identifizierten Codeart entsprechenden Algorithmus.

Für bestimmte Produkte ist es bekannt, den Code im Rahmen eines sogenannten Direct-Marking-Verfahrens mittels eines Stanzprozesses unmittelbar an dem Produkt anzubringen. Hierfür werden in eine einfarbige Fläche Stanzlöcher, sogenannte "Dots", eingebracht, die in Kontrast zu dem einfarbigen Hintergrund stehen und dadurch als Codeelemente dienen sollen.

Bei schlecht dargestellten Codes, insbesondere bei Codes, die nach dem Direct-Marking-Verfahren erzeugt worden sind, kann die Gefahr einer Nichterkennung oder einer fehlerhaften Erkennung des Codes bestehen.

Die EP 0 569 962 A2 beschreibt ein Verfahren und eine Vorrichtung zur Erkennung von Barcodes anhand von digitalen Bildern.

Die EP 0 785 522 A2 offenbart ein Verfahren und eine Vorrichtung zur Mustererkennung in digitalen Bildern.

Es ist eine Aufgabe der Erfindung, die Erkennung von Codes mit schlechter Darstellungsqualität zu verbessern, insbesondere die Erkennung von Codes, die im Direct-Marking-Verfahren erzeugt worden sind.

Diese Aufgabe wird durch ein jeweiliges Verfahren mit den Merkmalen der unabhängigen Ansprüche gelöst.

Bei der Erfindung wird also - zumindest für einen Teil der weiteren Verarbeitungs- und Decodierungsschritte - die ermittelte Bildinformation dahingehend modifiziert, daß einzelne Codeelemente, also dunkle und/oder helle Bereiche des Codes, vergrößert werden, so daß benachbarte Codeelemente als zusammenhängende Flächen erkannt und interpretiert werden können.

Die Erfindung bringt somit den Vorteil, daß benachbarte Codeelemente, die - unbeabsichtigt - visuell voneinander getrennt sind, als zusammenhängend erkannt werden können. Dadurch wird das insbesondere bei Codes des Direct-Marking-Verfahrens auftretende Problem vermieden, daß aufgrund nicht zusammenhängender Codeelementstrukturen der betreffende Code nicht erkannt, insbesondere sein Referenzmuster überhaupt nicht identifiziert werden kann.

Aufgrund der Zwischenschaltung der Dilationsoperation bzw. der Erosionsoperation in die weiteren Verfahrensschritte der Codeerkennung können - ohne die Notwendigkeit weiterer Modifizierungen - die üblichen Identifizierungs- und Decodierungsalgorithmen eingesetzt werden. Die Erfindung ist somit vorteilhaft einfach in bestehende Software und Hardware zur Codeerkennung integrierbar.

Gemäß einer ersten Ausführungsform wird die Dilationsoperation bzw. die Erosionsoperation nur hinsichtlich der Identifizierung des Referenzmusters des betreffenden Codes durchgeführt Im Rahmen der Erfindung wurde nämlich erkannt, daß mögliche Fehl-Erkennungen bei Codes von schlechter Darstellungsqualität hauptsächlich bei dem Verfahrensschritt der Identifizierung von Position und Codeart auftreten. Insbesondere kann es ausreichend sein, die Dilationsoperation bzw. Erosionsoperation lediglich hinsichtlich eines Teils des Referenzmusters durchzuführen, beispielsweise hinsichtlich des sogenannten Finder Pattern des Codes, wie nachfolgend noch erläutert wird. Hingegen hat sich gezeigt, daß nach erfolgreicher Identifizierung des Referenzmusters ein herkömmlicher Decodierungsalgorithmus auf Grundlage des ursprünglichen Bilddatensatzes, also ohne zusätzliche Dilations- oder Erosionsoperation, mit einer ausreichend niedrigen Fehlerquote arbeiten kann.

Gemäß einer weiteren Ausführungsform wird die Dilations- bzw. Erosionsoperation während des Abarbeitung eines Algorithmus zur Identifizierung des Referenzmusters durchgeführt, Hierbergeht die Operation mit der Identifizierung des Referenzmusters des Codes oder der Identifizierung eines Teils des Referenzmusters einher, nämlich indem die Dilations- bzw. Erosionsoperation implizit durchgeführt wird. Die erforderliche Verarbeitungszeit und der benötigte Zwischenspeicher können nämlich verringert werden, wenn die während des Abarbeitens eines Identifizierungsalgorithmus betrachteten Grauwerte jeweils lediglich zeitweise der Dilations- bzw. Erosionsoperation unterworfen werden.

Beispielsweise kann ein üblicher Identifizierungsalgorithmus den Bilddatensatz zeilenweise verarbeiten. In diesem Fall kann es ausreichen, wenn lediglich die Grauwerte der in dieser Zeile enthaltenen Bildpunktelemente der Dilations- bzw. Erosionsoperation unterworfen werden, und zu diesem Zweck lediglich diese Grauwerte sowie die Grauwerte der beiden benachbarten Bildpunktzeilen temporär betrachtet werden.

Alternativ hierzu ist jedoch möglich, ausgehend von dem ursprünglichen und unverändert beibehaltenen Bilddatensatz durch Durchführung einer Dilations- und/oder Erosionsoperation für jedes Bildpunktelement letztlich eine vollständige Kopie des Bilddatensatzes zu generieren, die auf grund der durchgeführten Operationen gegenüber dem ursprünglichen Bilddatensatz modifiziert ist.

Es ist bevorzugt, wenn die Dilations- bzw. Erosionsoperation grundsätzlich für alle Bildpunktelemente des Bilddatensatzes durchgeführt wird. Dies gilt jedoch nicht unbedingt für die äußeren Bildpunktelemente, also die Bildpunktelemente der Randbereiche der Bildinformation. Für diese Bildpunktelemente bzw. die entsprechenden Grauwerte kann auf die Dilations- bzw. Erosionsoperation verzichtet werden, oder der jeweiligen Operation wird lediglich eine beschränkte Umgebung von Bildpunktelementen zugrunde gelegt.

Was die eigentliche Durchführung der Dilationsoperation betrifft, so wird vorzugsweise für das betreffende Bildpunktelement die Umgebung, also die benachbarten Bildpunktelemente, daraufhin untersucht, welchen Wert der dunkelste Grauwert dieser Umgebung besitzt. Der aufgrund dieser Überprüfung identifizierte Grauwert wird dann dem betreffenden Bildpunktelement zugewiesen. Mit anderen Worten wird - je nach Definition - der minimale oder maximale Grauwert gesucht und der weiteren Verarbeitung des betreffenden Bildpunktelements zugrunde gelegt. Diese Vorgehensweise führt also dazu, daß dunkle Bereiche bildpunktweise vergrößert und benachbarte Codeelementstrukturen somit gegebenenfalls in zusammenhängende Strukturen überführt werden.

Für die genannte Umgebung kommt insbesondere eine sogenannte 9-Punkt-Umgebung in Betracht, also für ein orthogonales Raster von Bildpunktelementen die acht das betreffende Bildpunktelement umgebenden Bildpunktelemente. Diese Umgebungsbetrachtung kann somit auch als Verwendung eines Filterkerns oder einer Umwandlungsmaske angesehen werden.

In entsprechender Weise wird auch für die Durchführung der Erosionsoperation vorgegangen. Hier wird die Umgebung des betreffenden Bildpunktelements auf den hellsten Grauwert untersucht, um diesen Grauwert für das betreffende Bildpunktelement zu übernehmen und somit Strukturen von hellen Codeelementen zu vergrößern bzw. zusammenzuführen.

In einer Weiterbildung der Erfindung wird für die Dilationsoperation nicht der dunkelste Grauwert gesucht und dem betreffenden Bildpunktelement zugewiesen, sondern der zweidunkelste oder der drittdunkelste. Dies entspricht letztlich einer Medianfilterung und bringt besonders gute Ergebnisse bei vergleichsweise stark verrauschten oder gestörten Bildern.

Ob hierbei mit dem zweit- oder dem drittdunkelsten Grauwert oder sogar mit einem höherwertigen Kriterium gearbeitet wird, hängt letztlich davon ab, wie stark die Bildinformation verrauscht ist und wie groß die zugrunde gelegte Bildpunktelement-Umgebung und die ursprüngliche Abstufung der Grauwerte (Bit-Anzahl) ist.

Diese Weiterbildung der Erfindung ist ohne weiteres auch für die Erosionsoperation übertragbar, d. h. auch hier kann der zweit- oder dritthellste Grauwert gesucht und dem betreffenden Bildpunktelement zugewiesen werden.

Es ist bevorzugt, wenn bei Vorliegen eines hellhintergründigen Codes, also eines Codes, bei dem dunkle Codeelemente auf einen hellen Hintergrund aufgebracht oder in diesen eingestanzt sind, ausschließlich die Dilationsoperation durchgeführt wird. In entsprechender Weise ist es bevorzugt, wenn ein dunkelhintergründiger Code ausschließlich der Erosionsoperation unterworfen wird. Ob letztlich die Dilations- oder die Erosionsoperation durchgeführt werden soll, kann vorbestimmt oder im Rahmen des Codeerkennungsverfahrens beispielsweise durch ein Trial-and-Error-Verfahren entschieden werden.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1a, 1b und 1c: einen Code in guter Druckqualität, dessen L-Pattern bzw. dessen gesamtes Referenzmuster,
- Fig. 2a und 2b: diesen Code bzw. dieses L-Pattern bei Herstellung in einem Direct-Marking-Verfahren,
- Fig. 3a und 3b: den Code bzw. das L-Pattern gemäß Fig. 2a und 2b nach Dilation,
- Fig. 4a, 4b und 4c: weitere Verarbeitungsschritte nach erfolgreicher Identifizierung des L-Pattern, und
- Fig. 5a und 5b: einen invertierten Code vor bzw. nach Erosion.

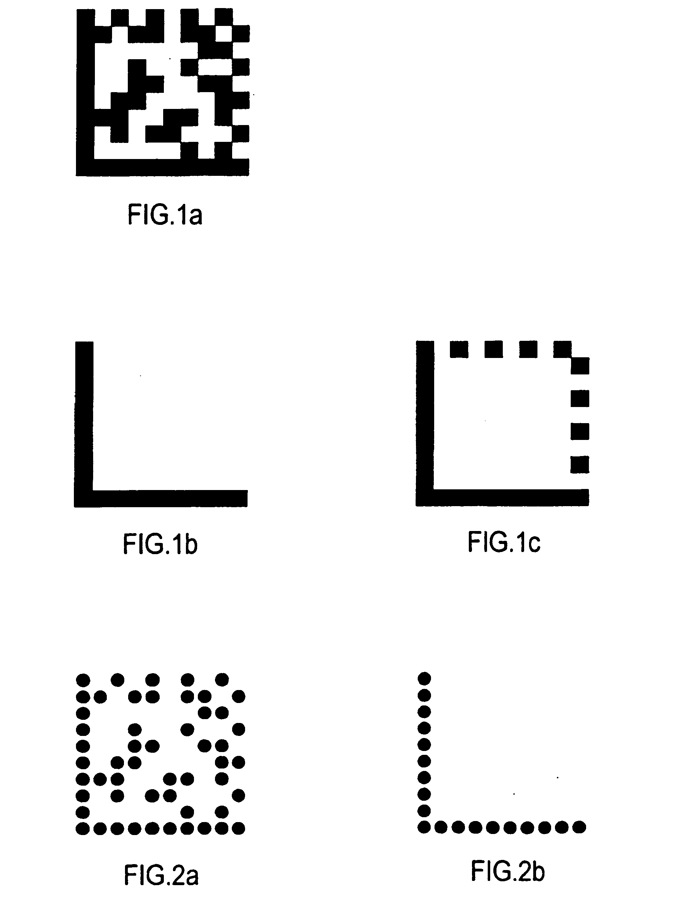

Fig. 1a zeigt einen zweidimensionalen Code der Art "Datamatrix", der in guter Druckqualität vorliegt. Dieser Code besteht aus einem schachbrettartigen Muster von hellen und dunklen im wesentlichen quadratischen Codeelementen, durch deren Anordnung eine Information verschlüsselt ist.

Der in Fig. 1a gezeigte Code enthält ein Referenzmuster, das durch eine vorbestimmte Anordnung der betreffenden Codeelemente vorgegeben ist und zur Lokalisierung des Codes innerhalb einer Bildumgebung sowie zur Identifizierung der Codeart dient. Dieses Referenzmuster ist isoliert in Fig. 1c gezeigt. Es besteht zum einen aus einem sogenannten L-Pattern, das zwei zueinander senkrecht angeordnete, durchgezogene Schenkel des im wesentlichen quadratischen Umrisses des Codes aufweist und separat in Fig. 1b dargestellt ist. Anhand dieses L-Pattern kann die Position und die Winkelanordnung des Codes der gezeigten Codeart "Datamatrix" innerhalb einer Bildumgebung erkannt werden.

Zum anderen weist das Referenzmuster gemäß Fig. 1c ein sogenanntes Timing Pattern auf, das aus einer alternierenden Abfolge von hellen und dunklen Codeelementen entlang zweier zueinander senkrecht angeordneter Schenkel des quadratischen Umrisses des Codes besteht. Dieses Timing Pattern gibt hinsichtlich der Codeart "Datamatrix" für die weiteren Identifizierungsschritte das Rastermaß vor, in dem die schachbrettartige Anordnung der weiteren Codeelemente zu erwarten ist.

Fig. 2a zeigt das Erscheinungsbild des Codes gemäß Fig. 1a, falls dieser nach einem Direct-Marking-Verfahren, insbesondere durch ein Lochstanzverfahren hergestellt worden ist. Die einzelnen dunklen Codeelemente sind bei dieser Herstellungsweise nicht durchgehend miteinander verbunden, sondern stets durch helle Stege voneinander getrennt. Für das L-Pattern ist dies in Fig. 2b gezeigt.

Gerade für den Codeerkennungschritt des ersten Identifizierens des Codes anhand seines L-Pattern kann dieser Umstand Schwierigkeiten bereiten. Die üblicherweise verwendeten Identifizierungsalgorithmen sind nämlich darauf angewiesen, daß das L-Pattern als durchgezogene Linie erscheint, wie - im Gegensatz zu Fig. 2b - in Fig. 1b gezeigt ist.

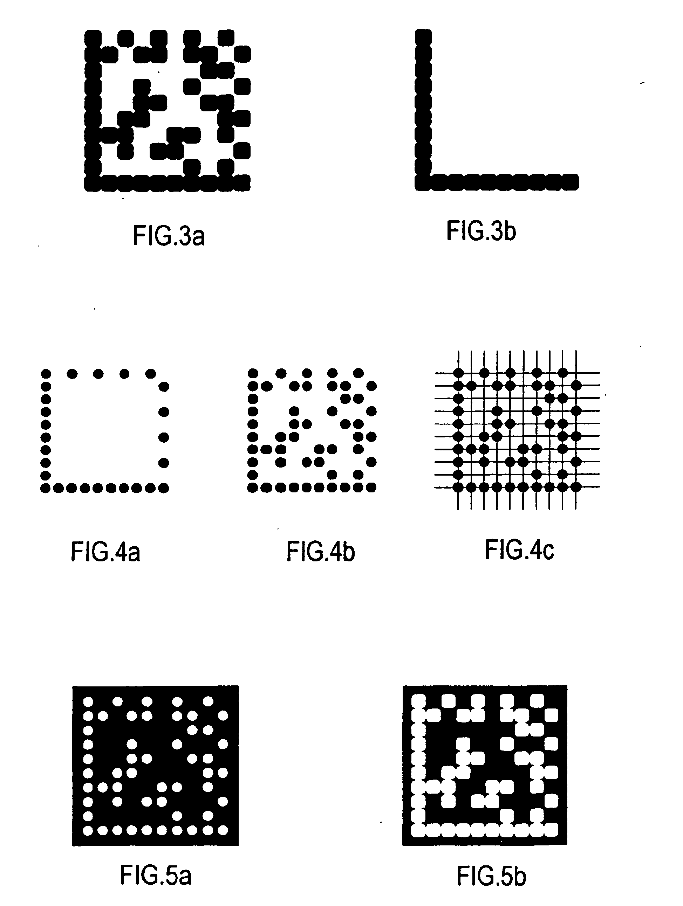

Dieses Problem wird erfindungsgemäß beseitigt, indem der Bilddatensatz, der die in Fig. 2a wiedergegebene Information enthält, für jedes Bildpunktelement einer Dilationsoperation unterworfen wird. Fig. 3a zeigt das Erscheinungsbild des Codes gemäß Fig. 2a, falls für jedes Bildpunktelement dieses Codes eine Dilationsoperation durchgeführt worden ist. Das entsprechende Erscheinungsbild des L-Pattern dieses Codes ist in Fig. 3b illustriert.

Fig. 3b läßt erkennen, daß anhand des modifizierten Bilddatensatzes gemäß Fig. 3a die Identifizierung des L-Pattern problemlos erfolgen kann, da die betreffenden dunklen Codeelemente nun als zusammenhängende Struktur erscheinen. Dadurch können nachfolgend die weiteren üblichen Codeerkennungsschritte durchgeführt werden, und zwar anhand des ursprünglichen Bilddatensatzes gemäß Fig. 2a und/oder anhand des modifizierten Bilddatensatzes gemäß Fig. 3a.

Im folgenden wird eine bevorzugte Vorgehensweise zur Erkennung und Decodierung des Codes gemäß Fig. 2a erläutert.

Zunächst wird mittels eines optoelektronischen Sensors, der eine Vielzahl von Bildpunktelementen erfaßt, der Code gemäß Fig. 2a sowie eine diesen Code umgebende, in Fig. 2a nicht dargestellte Bildumgebung eingelesen, also in elektronische Empfangssignale umgewandelt. Diese Bildinformation liegt beispielsweise in einer 8-Bit-Abstufung vor, also in einer Abstufung von 256 verschiedenen Grauwerten.

Als nächstes wird ein Binarisierungschritt durchgeführt. Anhand eines vorgegebenen Schwellenwerts wird also entschieden, ob der für ein bestimmtes Bildpunktelement ermittelte Grauwert einem dunklen Wert (schwarz) oder einem hellen Wert (weiß) zuzuordnen ist. Nach diesem Binarisierungsschritt entspricht der Bilddatensatz der Darstellung gemäß Fig. 2a: Die Grauwertinformation liegt in lediglich zwei unterschiedlichen Abstufungen vor.

Nach dem Binarisierungsschritt wird für sämtliche Bildpunktelemente - und somit für sämtliche nachfolgend noch zu identifizierenden Codeelemente - eine Dilationsoperation durchgeführt. Hierfür werden für ein betrachtetes Bildpunktelement die jeweiligen Grauwerte aller acht unmittelbar benachbarten Bildpunktelemente auf den dunkelsten Grauwert untersucht, und dieser dunkelste Grauwert wird dem betrachteten Bildpunktelement zugeschrieben. Dies führt letztlich zu einer Vergrößerung und gegebenenfalls zu einem Zusammenschließen der dunklen Bereiche des Codes, wie in den Fig. 3a und 3b gezeigt. Die erläuterte Zuordnung des jeweils dunkelsten Grauwerts zu dem betrachteten Bildpunktelement kann innerhalb einer Kopie des ursprünglichen Bilddatensatzes erfolgen, so daß also die Bildinformation gemäß Fig. 3a und 3b letztlich als separater, modifizierter Bilddatensatz vorliegt.

Diese Dilationsoperationen können in einem eigenen Durchgang für sämtliche Bildpunktelemente durchgeführt werden. Alternativ hierzu kann die Dilationsoperation für das jeweilige Bildpunktelement - wie bereits erläutert - implizit während eines weiteren Codeerkennungsschrittes, insbesondere während des Abarbeitens eines Algorithmus zur Erkennung des L-Pattern, durchgeführt werden.

Nach bzw. während der Durchführung der Dilationsoperation werden noch folgende Codeerkennungsschritte durchgeführt:
- Das L-Pattern wird identifiziert. Dieser Schritt wird auf Grundlage der dilatierten Bildinformation durchgeführt (Fig. 3b).
- Das Timing Pattern des Codes wird mittels eines entsprechenden Erkennungsalgorithmus identifiziert. Hierfür wird vorzugsweise auf den binarisierten, nicht dilatierten Bilddatensatz zurückgegriffen (Fig. 4a).
- Auf Grundlage des erkannten L-Pattern und Timing Pattern wird die Bitmatrix, also das Raster der hellen und dunklen Codeelemente identifiziert, so daß nun sämtliche Bildpunktelemente einem jeweiligen Codeelement zugeordnet sind (Fig. 4b und 4c).
- Schließlich kann die Decodierung dieser Bitmatrix erfolgen, um die in dem Code verschlüsselte Information zu erhalten.

Zu der erläuterten Vorgehensweise ist noch anzumerken, daß die Binarisierung auch erst nach der Dilationsoperation erfolgen kann. Dies kann insbesondere bei verrauschten oder bei gestörten Bildern von Vorteil sein, falls - wie bereits erläutert - die Dilationsoperation nicht anhand des dunkelsten, sondern anhand des zweit- oder drittdunkelsten Grauwerts erfolgen soll und zu diesem Zweck noch sämtliche ursprünglich ermittelte Abstufungen der Grauwerte bekannt sein sollen.

Es ist auch möglich, auf einen eigenen Binarisierungsschritt zu verzichten, falls der verwendete Sensor von vornherein nur zwei verschiedene Grauwerte liefert und somit den genannten Schwellenwertvergleich bereits implizit durchführt.

Schließlich ist anzumerken, daß das erläuterte Verfahren sich ohne weiteres auf sogenannte invertierte Codes übertragen läßt, also auf Codes, bei denen helle Codeelemente vor einem dunklen Hintergrund erscheinen. Dies ist in Fig. 5a für einen Code nach einem Direct-Marking-Verfahren bzw. in Fig. 5b nach Durchführung einer Erosionsoperation für sämtliche Bildpunktelemente dieses Codes gezeigt. Bei dieser Erosionsoperation wird ein Vergleich der Grauwerte der benachbarten Bildpunktelemente hinsichtlich des hellsten Grauwerts durchgeführt, um dem betrachteten Bildpunktelement diesen hellsten Grauwert zuzuordnen.

Außerdem ist anzumerken, daß das erfindungsgemäße Verfahren auch bei allen anderen eindimensionalen oder zweidimensionalen Codes verwendet werden kann. Dies betrifft insbesondere jene Codes, die mit einem vorbestimmten Referenzmuster versehen sind, beispielsweise mit konzentrischen Kreisen bei der Codeart "Maxicode".

## Patentansprüche

1. Verfahren zur Erkennung eines Codes, der ein Referenzmuster aufweist und der innerhalb eines Bilddatensatzes verschlüsselt ist, wobei der Bilddatensatz für mehrere Bildpunktelemente jeweils eine Information über einen Grauwert enthält, und wobei an dem Bilddatensatz wenigstens eine Dilationsoperation und/oder Erosionsoperation durchgeführt wird,
**dadurch gekennzeichnet,**
**daß** die Dilationsoperation bzw. Erosionsoperation nur hinsichtlich der Identifizierung des Referenzmusters des Codes oder eines Teils des Referenzmusters des Codes durchgeführt wird.

2. Verfahren nach Anspruch 1,
**dadurch gekennzeichnet,**
**dass** die Dilationsoperation bzw. Erosionsoperation nur hinsichtlich eines Finder Pattern des Codes durchgeführt wird.

3. Verfahren zur Erkennung eines Codes, der ein Referenzmuster auf weist und der innerhalb eines Bilddatensatzes verschlüsselt ist, wobei der Bilddatensatz für mehrere Bildpunktelemente jeweils eine Information über einen Grauwert enthält, und wobei an dem Bilddatensatz wenigstens eine Dilationsoperation und/oder Erosionsoperation durchgeführt wird, insbesondere nach einem der vorhergehenden Ansprüche,
**dadurch gekennzeichnet,**
**daß** die Dilationsoperation bzw. Erosionsoperation während der Abarbeitung eines Algorithmus zur Identifizierung des Referenzmusters des Codes oder eines Teils des Referenzmusters durchgeführt wird.

4. Verfahren zur Erkennung eines Codes, der ein Referenzmuster aufweist und der innerhalb eines Bilddatensatzes verschlüsselt ist, wobei der Bilddatensatz für mehrere Bildpunktelemente jeweils eine Information über einen Grauwert enthält, und wobei an dem Bilddatensatz wenigstens eine Dilationsoperation und/oder Erosionsoperation durchgeführt wird,
insbesondere nach einem der vorhergehenden Ansprüche,
**dadurch gekennzeichnet,**
**daß** die Dilationsoperation bzw. Erosionsoperation für die Identifizierung des Referenzmusters des Codes oder eines Teils des Referenzmusters des Codes durchgeführt wird, wobei nachfolgend die weiteren üblichen Codeerkennungsschritte - insbesondere eine Identifizierung eines Timing Pattern des Codes, eine Binarisierung der Grauwerte und/oder eine Decodierung des Bilddatensatzes - anhand des ursprünglichen Bilddatensatzes durchgeführt werden.

5. Verfahren nach einem der vorhergehenden Ansprüche,
**dadurch gekennzeichnet,**
**daß** die Dilationsoperation bzw. Erosionsoperation implizit durchgeführt wird, nämlich indem die während des Abarbeitens eines Identifizierungsalgorithmus betrachteten Grauwerte temporär der Dilationsoperation bzw. Erosionsoperation unterworfen werden.

6. Verfahren nach einem der vorhergehenden Ansprüche,
**dadurch gekennzeichnet,**
**daß** die Dilationsoperation bzw. Erosionsoperation für mehrere, insbesondere alle Bildpunktelemente des Bilddatensatzes durchgeführt wird.

7. Verfahren nach einem der vorhergehenden Ansprüche,
**dadurch gekennzeichnet,**
**daß** für die Durchführung der Dilationsoperation für ein Bildpunktelement eine Umgebung des Bildpunktelements, insbesondere eine 9-Punkt-Umgebung, hinsichtlich des dunkelsten, des zweitdunkelsten oder des drittdunkelsten Grauwerts untersucht wird, und
**daß** dieser Grauwert dem betreffenden Bildpunktelement zugewiesen wird.

8. Verfahren nach einem der vorhergehenden Ansprüche,
**dadurch gekennzeichnet,**
**daß** für die Durchführung der Erosionsoperation für ein Bildpunktelement eine Umgebung des Bildpunktelements, insbesondere eine 9-Punkt-Umgebung, hinsichtlich des hellsten, des zweithellsten oder des dritthellsten Grauwerts untersucht wird, und
**daß** dieser Grauwert dem betreffenden Bildpunktelement zugewiesen wird.

9. Verfahren nach einem der Ansprüche 7 und 8,
**dadurch gekennzeichnet,**
**daß** die Zuweisung des Grauwerts innerhalb einer Kopie des Bilddatensatzes erfolgt.

10. Verfahren nach einem der vorhergehenden Ansprüche,
**dadurch gekennzeichnet,**
**daß** bei Vorliegen eines hellhintergründigen Codes ausschließlich die Dilationsoperation durchgeführt wird, und/oder
**daß** bei Vorliegen eines dunkelhintergründigen Codes ausschließlich die Erosionsoperation durchgeführt wird.

11. Verfahren nach einem der vorhergehenden Ansprüche,
**dadurch gekennzeichnet,**
**daß** die Grauwerte in einer Abstufung von mehreren Bit, insbesondere acht Bit vorliegen, oder
**daß** es sich bei den Grauwerten um Binärwerte handelt.

12. Verfahren nach einem der vorhergehenden Ansprüche,
**dadurch gekennzeichnet,**
**daß** der Bilddatensatz mittels eines optoelektronischen Sensors, insbesondere eines CCD- oder CMOS-Empfängers erzeugt wird.

13. Verfahren nach einem der vorhergehenden Ansprüche,
**dadurch gekennzeichnet,**
**daß** es sich bei dem Code um einen eindimensionalen Code, insbesondere einen Barcode handelt, oder um einen zweidimensionalen Code, insbesondere der Art Maxicode, Datamatrix, QR, PDF 417 oder MicroPDF 417.

## Claims

1. A method of recognizing a code which has a reference pattern and which is encoded within an image data set, wherein the image data set contains a respective piece of information on a gray scale value for each of a plurality of picture elements and wherein at least one dilation operation and/or erosion operation is carried out on the image data set,
**characterized in that**
the dilation operation and/or the erosion operation is only carried out with respect to the identification of the reference pattern of the code or of a part of the reference pattern of the code.

2. A method in accordance with claim 1, **characterized in that** the dilation operation/and or the erosion operation is only carried out with respect to a finder pattern of the code.

3. A method of recognizing a code which has a reference pattern and which is encoded within an image data set, wherein the image data set contains a respective piece of information on a gray scale value for each of a plurality of picture elements and wherein at least one dilation operation and/or erosion operation is carried out on the image data set, in particular in accordance with any one of the preceding claims,
**characterized in that**
the dilation operation and/or the erosion operation is carried out during the working through of an algorithm for the identification of the reference pattern of the code or of a part of the reference pattern.

4. A method of recognizing a code which has a reference pattern and which is encoded within an image data set, wherein the image data set contains a respective piece of information on a gray scale value for each of a plurality of picture elements and wherein at least one dilation operation and/or erosion operation is carried out on the image data set,
in particular in accordance with any one of the preceding claims,
**characterized in that**
the dilation operation and/or the erosion operation is carried out for the identification of the reference pattern of the code or of a part of the reference pattern of the code, with subsequently the further usual code recognition steps - in particular an identification of a timing pattern of the code, a binarization of the gray values and/or a decoding of the image data set - being carried out with reference to the original image data set.

5. A method in accordance with any one of the preceding claims, **characterized in that** the dilation operation and/or the erosion operation is carried out implicitly, namely **in that** the grey scale values observed during the working through of an identification algorithm are temporarily subjected to the dilation operation and/or the erosion operation.

6. A method in accordance with any one of the preceding claims, **characterized in that** the dilation operation and/or the erosion operation is carried out for a plurality of picture elements, in particular all picture elements, of the image data set.

7. A method in accordance with any one of the preceding claims, **characterized in that**, for the carrying out of the dilation operation for a picture element, an environment of the picture element, in particular a 9 point environment, is examined with respect to the darkest, the second darkest or the third darkest gray scale value; and **in that** this gray scale value is assigned to the picture element in question.

8. A method in accordance with any one of the preceding claims, **characterized in that**, for the carrying out of the erosion operation for a picture element, an environment of the picture element, in particular a 9 point environment, is examined with respect to the lightest, the second lightest or the third lightest gray scale value; and **in that** this gray scale value is assigned to the picture element in question.

9. A method in accordance with one of the claims 7 and 8, **characterized in that** the assignment of the gray scale value takes place inside a copy of the image data set.

10. A method in accordance with any one of the preceding claims, **characterized in that**, when a light background code is present, only the dilation operation is carried out and/or, when a dark background code is present, only the erosion operation is carried out.

11. A method in accordance with any one of the preceding claims, **characterized in that** the gray scale values are present in a graduation of a plurality of bits, in particular of eight bits; or **in that** the gray scale values are binary values.

12. A method in accordance with any one of the preceding claims, **characterized in that** the image data set is produced by means of an optoelectronic sensor, in particular of a CCD receiver or CMOS receiver.

13. A method in accordance with any one of the preceding claims, **characterized in that** the code is a one-dimensional code, in particular a barcode, or a two-dimensional code, in particular of the kind Maxicode, Datamatrix, QR, PDF 417 or MicroPDF 417.

## Revendications

1. Procédé de reconnaissance d'un code qui présente un motif de référence et qui est chiffré à l'intérieur d'un ensemble de données d'imagerie, dans lequel l'ensemble de données d'imagerie contient pour plusieurs pixels une information respective sur une valeur de gris, et au moins une opération de dilatation et/ou une opération d'érosion étant effectuée sur l'ensemble de données d'imagerie,
**caractérisé en ce que**
l'opération de dilatation et/ou l'opération d'érosion, respectivement, n'est effectuée que du point de vue de l'identification du motif de référence du code ou d'une partie du motif de référence du code.

2. Procédé selon la revendication 1,
**caractérisé en ce que**
l'opération de dilatation et/ou l'opération d'érosion, respectivement, n'est effectuée que du point de vue d'un "Finder Pattern" du code.

3. Procédé de reconnaissance d'un code qui présente un motif de référence qui est chiffré à l'intérieur d'un ensemble de données d'imagerie, dans lequel l'ensemble de données d'imagerie contient pour plusieurs pixels une information respective sur une valeur de gris, et au moins une opération de dilatation et/ou une opération d'érosion étant effectuée sur l'ensemble de données d'imagerie,
**caractérisé en ce que**
l'opération de dilatation et/ou l'opération d'érosion, respectivement, est effectuée pendant l'exécution d'un algorithme pour identifier le motif de référence du code ou d'une partie du motif de référence.

4. Procédé de reconnaissance d'un code qui présente un motif de référence qui est chiffré à l'intérieur d'un ensemble de données d'imagerie, dans lequel l'ensemble de données d'imagerie contient pour plusieurs pixels une information respective sur une valeur de gris, et au moins une opération de dilatation et/ou une opération d'érosion étant effectuée sur l'ensemble de données d'imagerie,
**caractérisé en ce que**
l'opération de dilatation et/ou l'opération d'érosion, respectivement, est effectuée pour identifier le motif de référence du code ou d'une partie du motif de référence du code, et ensuite, les autres étapes habituelles de reconnaissance de code - en particulier une identification d'un timing pattern du code, une binarisation des valeurs de gris et/ou un décodage de l'ensemble de données d'imagerie - sont exécutées à l'aide de l'ensemble de données d'imagerie d'origine.

5. Procédé selon l'une des revendications précédentes,
**caractérisé en ce que**
l'opération de dilatation et/ou l'opération d'érosion, respectivement, est effectuée implicitement, c'est-à-dire en soumettant temporairement les valeurs de gris considérées pendant l'exécution d'un algorithme d'exécution, à l'opération de dilatation et/ou à l'opération d'érosion, respectivement.

6. Procédé selon l'une des revendications précédentes,
**caractérisé en ce que**
l'opération de dilatation et/ou l'opération d'érosion, respectivement, est effectuée pour plusieurs pixels, en particulier pour tous les pixels de l'ensemble de données d'imagerie.

7. Procédé selon l'une des revendications précédentes,
**caractérisé en ce que**
pour effectuer l'opération de dilatation pour un pixel, on analyse un environnement du pixel, en particulier un environnement à 9 points, du point de vue de la valeur de gris la plus sombre, la deuxième la plus sombre et la troisième la plus sombre, et **en ce que** cette valeur de gris est attribuée au pixel concerné.

8. Procédé selon l'une des revendications précédentes,
**caractérisé en ce que**
pour effectuer l'opération d'érosion pour un pixel, on analyse un environnement du pixel, en particulier un environnement à 9 points, du point de vue de la valeur de gris la plus claire, la deuxième la plus claire et la troisième la plus claire, et **en ce que** cette valeur de gris est attribuée au pixel concerné.

9. Procédé selon l'une des revendications 7 et 8,
**caractérisé en ce que**
l'attribution de la valeur de gris a lieu dans une copie de l'ensemble de données d'imagerie.

10. Procédé selon l'une des revendications précédentes,
**caractérisé en ce que**
en présence d'un code à arrière-plan clair, on effectue uniquement l'opération de dilatation, et/ou en présence d'un code à arrière-plan sombre, on effectue uniquement l'opération d'érosion.

11. Procédé selon l'une des revendications précédentes,
**caractérisé en ce que**
les valeurs de gris sont produites dans une différenciation de plusieurs bits, en particulier de huit bits, ou
**en ce que** les valeurs de gris sont des valeurs binaires.

12. Procédé selon l'une des revendications précédentes,
**caractérisé en ce que**
l'ensemble de données d'imagerie est engendré au moyen d'un capteur optoélectronique, en particulier d'un récepteur CCD ou CMOS.

13. Procédé selon l'une des revendications précédentes,
**caractérisé en ce que**
le code est un code monodimensionnel, en particulier un code à barres ou un code bidimensionnel, en particulier du type Maxicode, Datamatrix, QR, PDF 417 ou MicroPDF 417.
